# EUROPÄISCHE PATENTANMELDUNG

(11) **EP 1 447 263 A1**
(43) Veröffentlichungstag der Anmeldung: **18.08.2004**
(21) Anmeldenummer: 04002184.2
(22) Anmeldetag: 30.01.2004
(51) Int. Cl.: B60L 5/20

(54) **Stromabnehmer**

(30) Priorität: 13.02.2003 DE 10306019
(71) Anmelder: SIEMENS AKTIENGESELLSCHAFT, 80333 München (DE)
(72) Erfinder: Häckel, Heiko, 91054 Erlangen (DE)

(57) **Zusammenfassung**

Die Erfindung betrifft einen Stromabnehmer mit einer Schleifleiste zur Energieübertragung von einer Fahrleitung zu einem Fahrzeug, das insbesondere ein Schienenfahrzeug ist. Es ist vorgesehen, dass die Schleifleiste aus mindestens zwei Schichten besteht. Die oberste Schicht ist so hoch wie der maximal zulässige Abrieb und die darunter liegende Schicht hat ganz oder in einer oder in mehreren einzelnen Zonen über ihre gesamte Dicke eine andere Farbe als die oberste Schicht. Wenn die Farbe der unter der obersten Schicht angeordneten Schicht sichtbar wird, ist das ein Hinweis darauf, dass die Schleifleiste zu dünn ist und ausgetauscht werden muss. Die Überprüfung ist zuverlässig und kann nur durch Beobachten erfolgen.

## Beschreibung

Die Erfindung betrifft einen Stromabnehmer mit einer Schleifleiste zur Energieübertragung von einer Fahrleitung zu einem Fahrzeug.

Ein solches Fahrzeug ist insbesondere ein Schienenfahrzeug, wie beispielsweise eine Lokomotive.

Bekannte Stromabnehmer haben eine Schleifleiste, die im wesentlichen aus Kohlenstoff, verbunden mit einem Bindemittel, besteht. Während des Fahrbetriebes wird diese Schleifleiste abgenutzt und muss, wenn eine definierte Mindestdicke erreicht ist, ausgetauscht werden. Es ist also notwendig, die Dicke der Schleifleiste zu kontrollieren.

Bisher war es üblich, die Dicke der Schleifleiste in zeitlichen Abständen mit einer Schiebelehre zu messen. Da die die Schleifleiste haltende Trägerschiene mitgemessen wurde, musste selbstverständlich die Dicke der Trägerschiene subtrahiert werden.

Das Messen der Dicke mit einer Schiebelehre ist zeitaufwändig und mit einem hohen Messfehler behaftet. In der Regel musste nämlich das Fahrzeug in eine Werkstatt gebracht werden, wo ein sogenannter Dacharbeitsstand einen einfachen Zugang zum Stromabnehmer bietet. Messfehler konnten auftreten, da es wegen des Zeitaufwandes unmöglich war, die Dicke der Schleifleiste an sehr vielen Punkten zu bestimmen. In der Regel wurde nur an zwei oder drei Stellen gemessen, so dass unerkannt bleiben konnte, wenn die Schleifleiste zwischen den Messpunkten zu dünn geworden war.

Der Erfindung liegt die Aufgabe zugrunde, einen Stromabnehmer anzugeben, bei dem mit einfachen Mitteln zuverlässig zu erkennen ist, ob die Mindestdicke der Schleifleiste erreicht oder sogar unterschritten ist.

Die Aufgabe wird gemäß der Erfindung dadurch gelöst, dass die Schleifleiste aus mindestens zwei Schichten besteht, dass die oberste Schicht so hoch ist wie der maximal zulässige Abrieb und dass die darunter liegende Schicht ganz oder in einer oder in mehreren einzelnen Zonen über ihre gesamte Dicke eine andere Farbe hat als die oberste Schicht.

Es kann nur eine solche Zone vorhanden sein oder insbesondere mehrere Zonen, die in der Schicht verteilt sind.

Die Dicke der obersten Schicht wird dabei so gewählt, dass dann, falls sie vollständig beseitigt wäre, die Dicke der verbleibenden Schleifleiste gerade der minimal zulässigen Dicke entspricht. Folglich entspricht die Dicke der obersten Schicht dem maximal zulässigen Abrieb.

Dadurch, dass die unter der obersten Schicht liegende Schicht ganz oder in einer oder mehreren Zonen über ihre gesamte Dicke eine andere Farbe hat als die oberste Schicht, wird nachdem die oberste Schicht entfernt worden ist, die zumindest teilweise andersfarbige Oberfläche der nächsten Schicht sichtbar.

Es wird der Vorteil erzielt, dass nur durch Betrachten der Schleifleiste von einem erhöhten Standort aus, z.B. von einer Brücke oder von einem Gebäude aus, durch die Farbgebung sofort zu erkennen ist, ob die Schleifleiste zu stark abgenutzt ist oder nicht. Allein die Farbgebung der Oberfläche der Schleifleiste gibt einen eindeutigen Hinweis auf deren verbleibende Dicke. Es muss vorteilhafterweise keine Schiebelehre mehr eingesetzt werden, und damit erübrigt sich auch ein Dacharbeitsstand. Es wird insbesondere auch der Vorteil erzielt, dass der Stromabnehmer für die Überprüfung nicht außer Betrieb sein muss, da er zur Überprüfung nicht berührt werden muss.

Außerdem ist die Genauigkeit der Überprüfung gut, da stets die gesamte Fläche der Schleifleiste zu sehen ist und man sich nicht auf einzelne Messpunkte bei der Überprüfung beschränken muss. Schon falls an nur einem Punkt die farbige Schicht zu sehen ist, wird baldmöglichst ein Austausch der Schleifleiste vorgenommen.

Eine Überprüfung der Schleifleiste ist also mit geringem Aufwand schnell und zuverlässig durchführbar.

In der Regel reicht es aus, wenn die Schleifleiste aus zwei Schichten besteht, von denen die untere ganz oder in einer oder in mehreren einzelnen Zonen über ihre gesamte Dicke eingefärbt ist. Es können jedoch bei Bedarf auch weitere Schichten unter der eingefärbten Schicht vorhanden sein. Unter den Schichten der Schleifleiste befindet sich stets die Trägerschiene zur mechanischen Stabilisierung, die meist aus Aluminium besteht.

Beispielsweise hat die unter der obersten Schicht liegende Schicht insgesamt eine andere Farbe als die oberste Schicht.

Damit wird der Vorteil erzielt, dass unabhängig vom Ort, an dem die oberste Schicht vollständig abgetragen ist, stets farbiges Material zu sehen ist. Da die Stromführung von oben nach unten durch alle Schichten der Schleifleiste gewährleistet sein muss, ist jedoch darauf zu achten, dass auch die farbige Schicht zumindest die gleiche elektrische Leitfähigkeit gewährleistet wie die ungefärbte Schicht aus hauptsächlich Kohlenstoff.

Nach einem anderen Beispiel sind in einer oder mehreren sich von oben nach unten erstreckenden Ausnehmungen, die sich in der unter der obersten Schicht liegenden Schicht befinden, ein oder mehrere Füllkörper angeordnet, die eine andere Farbe als die oberste Schicht haben.

Damit wird der zusätzliche Vorteil erzielt, dass die Leitfähigkeit der Füllkörper nicht auf die erforderliche Leitfähigkeit der gesamten Schleifleiste abgestellt werden muss. Der elektrische Strom fließt nämlich in der unter der obersten Schicht liegenden Schicht hauptsächlich außerhalb der Füllkörper in dem nicht gefärbten Material, das dem üblichen Material der Schleifleiste entspricht. Dafür, dass bei der Materialauswahl einfacher als beim erstgenannten Beispiel vorgegangen werden kann, muss in Kauf genommen werden, dass eine vollständige Abnutzung der obersten Schicht unentdeckt bleiben könnte, falls von der darunter liegenden Schicht ein Abschnitt sichtbar wird, der neben den mit Füllkörpern gefüllten Ausnehmungen liegt.

Beispielsweise bestehen die Füllkörper aus hitzebeständigem Material. Das ist notwendig, um eine Beschädigung der Füllkörper während des Betriebs des Fahrzeuges zu vermeiden.

Falls die gesamte unter der obersten Schicht liegende Schicht eingefärbt ist, ist diese beispielsweise ganz mit hitzebeständigem Material, das die Farbgebung bewirkt, versetzt. Auch hier ist es notwendig ein hitzebeständiges Material zu verwenden, damit die eingefärbte Schicht nicht durch Wärmeeinwirkung beschädigt werden kann.

Das Material ist in der betreffenden Schicht mit dem Kohlenstoff vermischt, so dass es hauptsächlich zur Farbgebung dient, während die elektrische Leitfähgkeit hauptsächlich durch den Kohlenstoff sichergestellt wird.

Ein geeignetes Material ist beispielsweise ein Metall.

Ein besonders geeignetes Metall ist Kupfer, das sich farblich besonders gut vom Kohlenstoff unterscheidet. Das gilt auch dann noch, wenn das Kupfer, nachdem es mit der Umgebung in Kontakt gekommen ist, oxidiert worden ist.

Andere geeignete Metalle sind Aluminium oder Zinn. Auch Legierungen sind möglich.

Beispielsweise ist das Material nicht leitfähig. Es ist damit besonders einfach, ein geeignetes farbiges Material zu finden. Der Stromfluss geht dann im Bereich der betreffenden Schicht, falls Füllkörper vorhanden sind, an diesen vorbei.

Nach einem Beispiel ist das Material eine Keramik, wobei die Füllkörper ganz aus dieser Keramik bestehen können, während in der vollständig eingefärbten Schicht Keramikpartikel dem Kohlenstoff beigemischt sind.

Bei der Auswahl des Materials kommt es hauptsächlich darauf an, dass es sich farblich gut vom Kohlenstoff unterscheidet.

Mit dem Stromabnehmer nach der Erfindung wird insbesondere der Vorteil erzielt, dass nur durch Beobachten aus der Entfernung festgestellt werden kann, ob die Schleifleiste des Stromabnehmers zu dünn geworden ist und folglich ausgetauscht werden muss.

## Patentansprüche

1. Stromabnehmer mit einer Schleifleiste zur Energieübertragung von einer Fahrleitung zu einem Fahrzeug,
**dadurch gekennzeichnet, dass** die Schleifleiste aus mindestens zwei Schichten besteht, dass die oberste Schicht so hoch ist wie der maximal zulässige Abrieb und dass die darunter liegende Schicht ganz oder in einer oder in mehreren einzelnen Zonen über ihre gesamte Dicke eine andere Farbe hat als die oberste Schicht.

2. Stromabnehmer nach Anspruch 1,
**dadurch gekennzeichnet, dass** die unter der obersten Schicht liegende Schicht insgesamt eine andere Farbe hat als die oberste Schicht.

3. Stromabnehmer nach Anspruch 1,
**dadurch gekennzeichnet, dass** in einer oder mehreren sich von oben nach unten erstreckenden Ausnehmungen, die sich in der unter der obersten Schicht liegenden Schicht befinden, ein oder mehrere Füllkörper angeordnet sind, die eine andere Farbe als die oberste Schicht haben.

4. Stromabnehmer nach Anspruch 3,
**dadurch gekennzeichnet, dass** die Füllkörper aus hitzebeständigem Material bestehen.

5. Stromabnehmer nach Anspruch 2,
**dadurch gekennzeichnet, dass** die gesamte unter der obersten Schicht liegende Schicht mit hitzebeständigem Material zur Farbgebung versetzt ist.

6. Stromabnehmer nach einem der Ansprüche 4 oder 5,
**dadurch gekennzeichnet, dass** das Material ein Metall ist.

7. Stromabnehmer nach Anspruch 6,
**dadurch gekennzeichnet, dass** das Metall Kupfer, Aluminium und/oder Zinn ist.

8. Stromabnehmer nach einem der Ansprüche 4 oder 5,
**dadurch gekennzeichnet, dass** das Material nicht leitfähig ist.

9. Stromabnehmer nach Anspruch 8,
**dadurch gekennzeichnet, dass** das Material eine Keramik ist.
